# EUROPÄISCHE PATENTSCHRIFT

(11) **EP 0 653 550 B1**
(45) Veröffentlichungstag und Bekanntmachung des Hinweises auf die Patenterteilung: **04.09.1996**
(21) Anmeldenummer: 94115827.1
(22) Anmeldetag: 07.10.1994
(51) Int. Cl.: F01M 13/02, F02M 25/08

(54) **Entlüftungseinrichtung einer Brennkraftmaschine**
Breather device for an internal combustion engine
Dispositif de renifleur pour moteur à combustion interne

(30) Priorität: 12.10.1993 DE 4334702
(43) Veröffentlichungstag der Anmeldung: 17.05.1995
(73) Patentinhaber: ADAM OPEL AG, 65423 Rüsselsheim (DE)
(72) Erfinder: Volz, Wolfgang, D-65428 Rüsselsheim (DE); Dreier, Michael, Dipl.-Ing., D-64572 Büttelborn (DE)
(74) Vertreter: Kümpfel, Heinz, Dipl.-Ing.

(56) Entgegenhaltungen:
- EP-A- 0 599 095
- GB-A- 368 684
- GB-A- 2 134 976
- US-A- 2 056 762
- US-A- 3 554 175
- MTZ MOTORTECHNISCHE ZEITSCHRIFT, Bd.55, Nr.4, April 1994, STUTTGART DE Seiten 198 - 206 VON BRAND, BREITWIESER, GIEBEL UND ZICKWOLFF 'DIE MOTOREN IM NEUEN OPEL OMEGA'

## Beschreibung

Die Erfindung betrifft eine Entlüftungseinrichtung einer Brennkraftmaschine, welche mit mehreren Entlüftungskreisen arbeitet, insbesondere für eine Brennkraftmaschine mit zwei Zylinderbänken.

Um die Emissionswerte einer Brennkraftmaschine auf einem tolerierbar niedrigem Niveau zu halten, ist es notwendig und bekannt, die im Kurbelgehäuse anfallenden Gase, insbesondere die Blow-by-Gase, kontinuierlich aus dem Kurbelgehäuse abzusaugen und beim Motorbetrieb mit zu verbrennen. Aus dem gleichen Grund werden auch bei Kraftfahrzeugen die Gase aus der Tankentlüftung nicht ins Freie entlassen, sondern abgesaugt und in der Brennkraftmaschine des Kraftfahrzeuges verbrannt. Bekannt ist es auch, Brennkraftmaschinen mit zwei Entlüftungskreisen zu betreiben, um einerseits bei Leerlauf der Maschine eine ausreichende Beseitigung der schädlichen Gase zu erzielen, andererseits bei Last, insbesondere bei Vollast, ein Absaugen von Öl aus der Maschine zu vermeiden.

Um alle diese Forderungen erfüllen zu können, ist es notwendig, eine Vielzahl von Leitungen mit definierten Strömungswiderständen zwischen den zu entlüftenden Aggregateteilen und den richtigen Orten der Ansauganlage zu verlegen.

Mit DE-PS 42 29 408 ist eine Lösung beschrieben, mit der die zylinderbezogene Verteilung der in einen Luftsammler der Ansauganlage mit einem Hauptansaugstutzen sowie einem dazu als Bypass für den Leerlaufbereich angeordneten Nebeneinlaßstutzen zugeführten Kurbelgehäusegase besonders im Leerlauf verbessert werden soll. Dazu wird vorgeschlagen, die Kurbelgehäuseentlüftung über einen Leitungsabschnitt in eine Kammer der Ansauganlage münden zu lassen, in welche auch der Nebenansaugstutzen mündet und von der Öffnungen zum Luftsammler zur Versorgung aller Zylinder führen. Damit kann zwar die Vermischung des Kurbelgehäusegases mit der Ansaugluft verbessert werden. Eine gesteuerte Zuteilung der Entlüftungsgase auf die beiden Zylinderbänke, eine Schwingungsoptimierung der Gassäule in den Entlüftungswegen sowie eine volumetrische Abstimmung der Kurbelgehäuseentlüftung in bezug auf die Motorlast ist daraus nicht erkennbar. Bei Brennkraftmaschinen mit mehreren Zylinderbänken soll aber jede Zylinderbank gleichmäßig an der Entlüftung beteiligt sein, damit insbesondere im Leerlauf und in Teillastbereichen überhaupt die Voraussetzungen für eine gleichmäßige Zylinderbefüllung gegeben sind.

Aufgabe der Erfindung ist es daher, eine Entlüftungseinrichtung der eingangs genannten Art zu schaffen, welche die vielfältigen Anforderungen mit relativ geringem Fertigungsaufwand erfüllen kann.

Erfindungsgemäß wird diese Aufgabe dadurch gelöst, daß im Entlüftungsweg zwischen den zu entlüftenden Aggregaten und dem Ansaugtrakt der Brennkraftmaschine ein Adapter vorgesehen ist, welcher einerseits mittels Leitungen mit den Aggregaten verbunden ist und andererseits über im Adapter befindliche schwingungsoptimierte Kanäle sowie über kalibrierte Öffnungen derart mit dem Ansaugtrakt verbunden ist, daß jedes zu entlüftende Aggregat bei dem jeweiligen Betriebszustand der Brennkraftmaschine mit dem richtigen Ort des Ansaugtraktes in Verbindung steht.

Durch eine solche Maßnahme kann bei der Fertigung von Brennkraftmaschinen erheblich Montagezeit eingespart werden, da für jeden Motorentyp ein spezifischer Adapter zur Verfügung steht, welcher die Anforderungen an das Entlüftungssystem hinsichtlich der richtigen Anschlüsse, deren Drosselquerschnitte sowie der schwingungsoptimierten Abstimmung der Kanallängen sichert.

Der Adapter besteht vorzugsweise aus einem über dem Ansaugtrakt der Brennkraftmaschine angeordneten flachen Gehäuse, dessen Innenraum durch zwischen den Wandungen verlaufende Stege in Kanäle aufgeteilt ist, welche an einer Stirnseite des Gehäuses beginnen und jeweils bis zu einem Zielort an dem benachbarten Ansaugtrakt führen und dort kalibrierte Öffnungen aufweisen, die über Verbinder mit dem Ansaugtrakt gasleitend verbunden sind.

Durch die flache Ausbildung des Adapter kann zwischen Adapter und Ansaugtrakt an allen erforderlichen Orten eine direkte Verbindung geschaffen werden. Darüber hinaus ermöglicht die flache Form des Adapters eine gefällige Gestaltung der oberen Ansicht der Brennkraftmaschine. Die sich dadurch ergebende ebene obere Fläche erleichtert auch die Sauberhaltung.

Das Gehäuse des Adapters besteht vorteilhafterweise aus zwei mit ihren offenen Seiten aufeinanderliegenden flachen Schalen mit in ihrem Inneren entlang der Bodenfläche verlaufenden Stegen, wobei sowohl die äußeren Ränder der Schalen als auch die Stege beider Schalen miteinander gasdicht verbunden sind und so die Kanäle bilden, die dem Ansaugtrakt zugewandte Schale die kalibrierten Öffnungen und die andere Schale die an der einen Stirnseite des Adapters angeordneten zu jedem Kanal gehörenden Stutzen aufweist.

Die gasdichte Verbindung zwischen den umlaufenden Rändern und den Stegen der Schalen erfolgt vorzugsweise dadurch, daß die Ränder und die Stege an der einen Schale als U-förmige Rinne, die umlaufenden Ränder und die Stege der anderen Schale als in die U-förmige Rinne eintauchende Rippen ausgebildet sind und die Ränder sowie die Stege beider Schalen unlösbar miteinander verbunden sind.

Als Verbindung zwischen den beiden Schalen kann in vorteilhafter Weise eine Reibschweißverbindung dienen.

Die Verbinder zwischen dem Adapter und dem Ansaugtrakt sind vorzugsweise als mit dem Adapter fest verbundene Stutzen ausgebildet, welche dichtend in Öffnungen des Ansaugtraktes eingreifen.

Als Verbinder können jedoch auch Muffen Verwendung finden, welche am Adapter befindliche Stutzen mit Stutzen am Ansaugtrakt verbinden.

Der Adapter besteht vorzugsweise aus einem thermoplastischen Kunststoff, so daß die Herstellung der den Adapter bildenden beiden Schalen durch Spritzgießen erfolgen kann.

Ein Ausführungsbeispiel der Erfindung ist nachstehend anhand von Zeichnungen näher erläutert. Es zeigen
- Fig. 1:: das Schema einer erfindungsgemäßen Entlüftungseinrichtung;
- Fig. 2:: einen Adapter für eine Entlüftungseinrichtung nach Fig. 1 in Draufsicht;
- Fig. 3:: den Adapter nach Fig. 2 in Seitenansicht;
- Fig. 4:: eine Ansicht auf den geöffneten Adapter nach Fig. 2;
- Fig. 5:: einen Schnitt entlang der Linie A - A in Fig. 3 in größerem Maßstab.

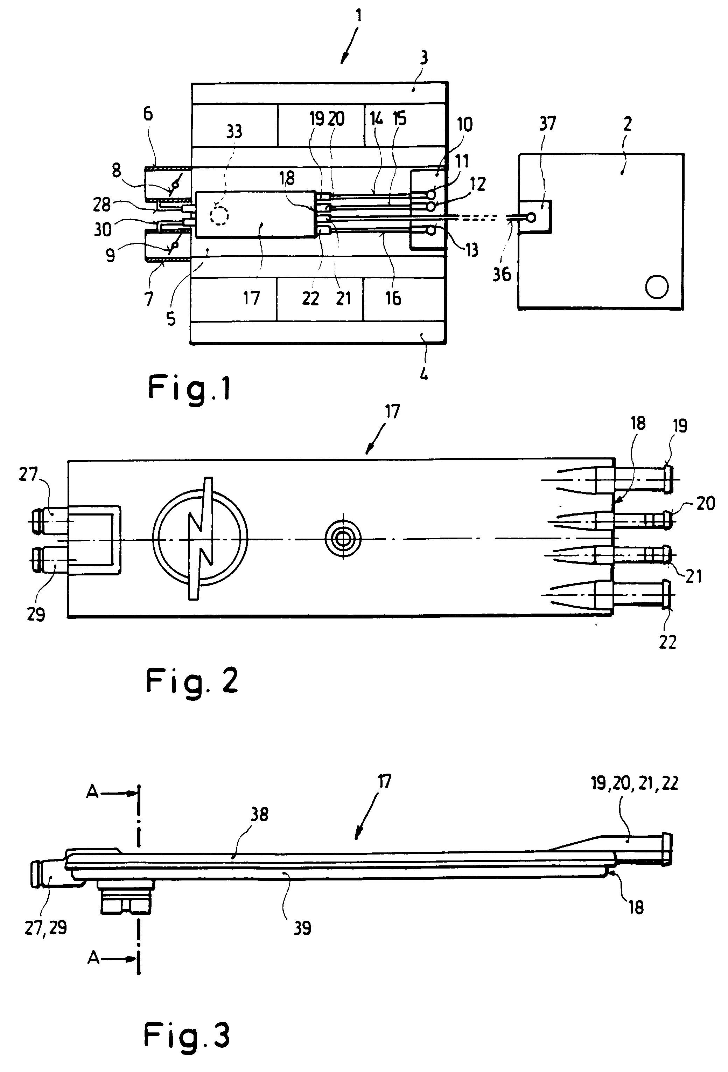

In Fig. 1 ist stark vereinfacht die Draufsicht einer Brennkraftmaschine 1 mit sechs in V-Form angeordneten Zylindern sowie einem Kraftstofftank 2 zur Brennstoffversorgung dargestellt. Die Brennkraftmaschine 1 hat zwei Zylinderbänke 3 und 4, zwischen denen ein Ansaugtrakt 5 für die Zuführung von Luft durch die Ansaugstutzen 6 und 7 angeordnet ist. Dabei versorgt der Ansaugstutzen 6 die eine Zylinderbank 3 und der Ansaugstutzen 7 die andere Zylinderbank 4. In jedem der beiden Ansaugstutzen 6 und 7 ist eine Drosselklappe 8 bzw. 9 vorgesehen. An einer Stirnseite der Brennkraftmaschine 1 ist zwischen den beiden Zylinderbänken 3 und 4 sowie verbunden mit dem Kurbelgehäuse ein Ölabscheider 10 vorgesehen, an dessen obersten Bereich Stutzen 11, 12 und 13 für die Abführung der Kurbelgehäusegase vorgesehen sind. Die Stutzen 11, 12 und 13 sind über Leitungen 14, 15 und 16 unter Zwischenschaltung eines Adapters 17 mit dem Ansaugtrakt 5 bzw. den zu dem Ansaugtrakt gehörenden Ansaugstutzen 6 und 7 verbunden. Dazu weist der Adapter 17 an einer zum Ölabscheider 10 weisenden Stirnseite 18 Stutzen 19, 20, 21 und 22 auf, welche mit im Adapter 17 verlaufenden Kanälen 23, 24, 25, 26 verbunden sind.

Der am Stutzen 19 beginnende Kanal 23 führt zu einer kalibrierten Öffnung 27, die über einen Verbinder 28 mit dem einen Ansaugstutzen 6, und zwar in Strömungsrichtung vor der Drosselklappe 8, verbunden ist. Der am Stutzen 22 beginnende Kanal 26 führt zu einer kalibrierten Öffnung 29, die über einen Verbinder 30 mit dem Ansaugstutzen 7, in Strömungsrichtung vor der Drosselklappe 9, verbunden ist. Die Öffnungen 27 und 29 sind gleich groß kalibriert und haben einen relativ großen Querschnitt. Der am Stutzen 20 beginnende Kanal 24 führt zu zwei kalibrierten Öffnungen 31 und 32, wobei die Öffnung 31 mit dem zur Zylinderbank 3 führenden inneren Teil des Ansaugtraktes 5 und die Öffnung 32 mit dem zur Zylinderbank 4 führenden inneren Teil des Ansaugtraktes 5 über einen Verbinder 33 verbunden ist.

Der am Stutzen 21 beginnende Kanal 25 führt ebenfalls zu zwei kalibrierten Öffnungen 34 und 35, wobei die Bohrung 34 mit dem zur Zylinderbank 3 führenden inneren Teil des Ansaugtraktes 5 und die Öffnung 35 mit dem zur Zylinderbank 4 führenden inneren Teil des Ansaugtraktes 5 über den Verbinder 33 verbunden ist.

Der Verbinder 33 ist als Zapfen ausgebildet, welcher dichtend in eine Bohrung des Ansaugtraktes 5 über der Trennwand zwischen den Saugräumen für die Zylinderbänke 3 und 4 so eingesetzt ist, daß die Öffnung 31 des Kanals 24 zu der Zylinderbank 3 gehörig und die andere Öffnung 32 zu der Zylinderbank 4 gehörig ist, ebenso die Öffnung 34 des Kanals 25 zu der Zylinderbank 3 und die Öffnung 35 zur Zylinderbank 4.

Der Stutzen 21 des Adapters 17 ist mittels einer Leitung 36 verbunden mit einem an sich bekannten Aktivkohlefilter 37 oberhalb des Kraftstofftanks 2.

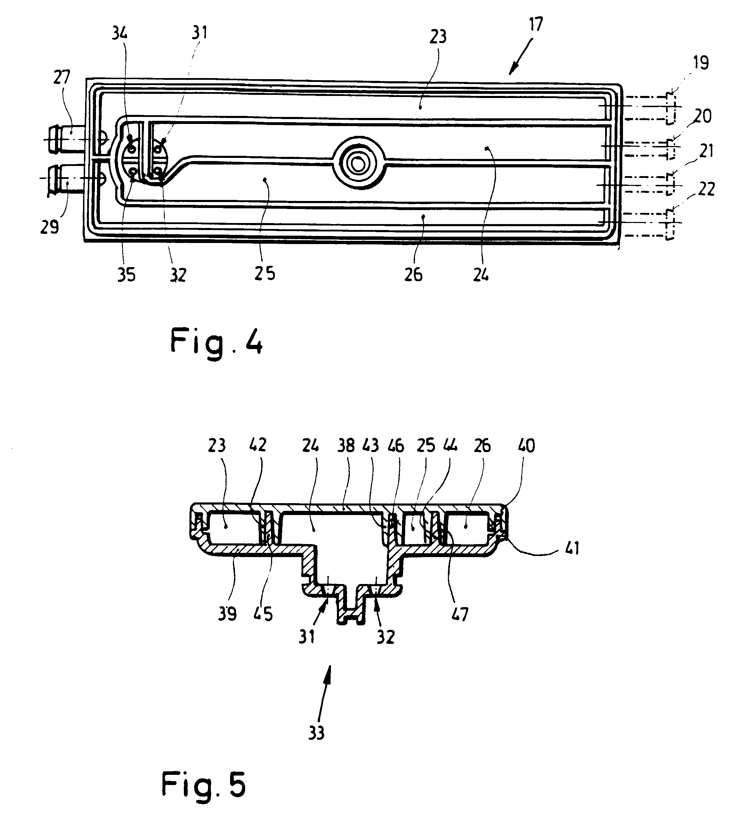

Der Adapter 17 besteht aus einer oberen Schale 38 und einer unteren Schale 39 - beide mit rechteckigem Grundriß - , welche mit ihren äußeren umlaufenden Rändern 40, 41 sowie mit in ihrem Inneren entlang der Bodenfläche verlaufenden Stegen 42, 43, 44 bzw. 45, 46, 47 gasdicht miteinander verbunden sind. Die Ränder 40, 41 sowie die Stege 42, 43, 44 bzw. 45, 46, 47 bilden gemeinsam die Kanäle 23, 24, 25 und 26, die sich im wesentlichen zwischen den beiden schmalen Seiten des Adapters 17 erstrecken. Damit ist die Länge der Kanäle 23 und 26 durch die Länge des Adapters 17 bestimmt. Die wirksame Länge der Kanäle 24 und 25 wird bestimmt durch die Anordnung des Stutzens 33 an der Schale 39 sowie die Gestaltung des Stutzens 33. Wie Fig. 4 zeigt, ist die wirksame Länge des Kanals 25 größer als die des Kanals 24, und zwar um das Maß des Abstandes zwischen den Öffnungen 31 und 32 einerseits sowie den Öffnungen 34 und 35 andererseits. Durch konstruktive Veränderung dieses Abstandes ist somit auch eine Veränderung der Längen der Kanäle 24 und 25 absolut und im Verhältnis zueinander möglich.

Der Rand 40 sowie die Stege 42, 43 und 44 der oberen Schale 38 sind im Querschnitt U-förmig. In diese U-förmigen Querschnitte greifen der Rand 41 sowie die Stege 45, 46, 47 der anderen Schale 39 ein und bilden so eine formschlüssige Verbindung, welche z. B. durch Reibschweißen in eine nicht lösbare gasdichte Verbindung umgewandelt werden kann.

Die Stutzen 19, 20, 21 und 22 sind Teil der oberen Schale 38; die Öffnungen 27 und 29 sind ebenso wie die in Verbindung mit dem Stutzen 33 zu sehenden Öffnungen 31, 32, 34 und 35 Teile der anderen Schale 39 (Fig. 2 und Fig. 3).

Ein solcher Adapter 17 ist somit nicht nur kostengünstig herstellbar, er ermöglicht bei einer Entlüftungseinrichtung einer Brennkraftmaschine auch eine mit einfachen Mitteln realisierbare und dabei sehr exakte Zuordnung und Bemessung der Belüftungswege. So wird aus dem Ölabscheider 10 über die Stutzen 11 und 13, die Leitungen 14 und 16, die am Adapter 17 befindlichen Stutzen 19 und 22, die im Adapter 17 verlaufenden Kanäle 23 und 26, die kalibrierten Öffnungen 27 und 29 sowie die Verbinder 28 und 30 bei Belastung der Brennkraftmaschine, d. h. bei teilweise oder vollständig geöffneten Drosselklappen 8 und 10, das Kurbelgehäusegas in den Ansaugtrakt 5 gesaugt.

Dabei erhält jede der für eine Zylinderbank 3, 4 zuständige Seite des Ansaugtraktes 5 exakt die gleiche Gasmenge, so daß eine einseitige Veränderung des Gemisches nicht eintreten kann. Durch richtige Bemessung der Länge der Kanäle 23 und 26 sowie der Querschnitte der Öffnungen 27 und 29 kann auch über den gesamten Drehzahlbereich der Brennkraftmaschine eine schwingungsmäßige Entkoppelung der Entlüftungsstrecke erreicht werden.

Bei Leerlauf, d. h. bei geschlossenen Drosselklappen 8 und 9, liegt an den Verbindern 28 und 30 kein Unterdruck an. Die Entlüftung des bei diesem Betriebszustand wesentlich geringer anfallenden Kurbelgehäusegases erfolgt dann allein über den Stutzen 12, die Leitung 15, den Stutzen 20, die Kanal 24 und die Öffnungen 31 und 32 in den Ansaugtrakt 5. Auch hier ist eine exakte Trennung der beiden Seiten des Ansaugtraktes 5 gegeben. Der Querschnitt der Öffnungen 31 und 32 sowie die Länge des Kanals 24 ermöglichen ein optimales Abstimmen des Schwingungsverhaltens der geführten Gassäule.

Einbezogen in die Entlüftung des Kurbelgehäuses ist auch die Entlüftung des Kraftstofftankes 2 über ein Aktivkohlefilter 37. Das Gas wird über die Leitung 36, den Stutzen 21 und dem Kanal 25 zu den Öffnungen 34 und 35 geführt und gelangt dort, jeweils zur Hälfte, in die beiden Seiten des Ansaugtraktes 5.

Mit einer solchen Entlüftungseinrichtung sind für alle Betriebszustände der Brennkraftmaschine abgestimmte Schwingrohrlängen für die Entlüftung in einem integrierenden Bauteil untergebracht. Damit kann über den gesamten Betriebsbereich der Brennkraftmaschine gesichert werden, daß die Gemischzusammensetzung nicht unkontrolliert verändert wird. Die Abgaswerte können damit optimiert werden. Ebenso werden die Motorleistungswerte nicht negativ beeinflußt.

Zusätzlich zu den funktionellen Vorteilen ist damit eine kostengünstige und optisch ansprechende Lösung gegeben.

Dabei ist die Erfindung nicht auf das Ausführungsbeispiel beschränkt. Sie ist ebenso wie für Brennkraftmaschinen mit zwei Zylinderbänken und zwischen den Zylinderbänken getrennten Ansaugsystemen auch für Maschinen mit für beide Zylinderbänke gemeinsamen Ansaugsystemen und auch für Maschinen mit nur einer Zylinderbank anwendbar, wobei die Anzahl der Zylinder unwesentlich ist.

## Patentansprüche

1. Entlüftungseinrichtung einer Brennkraftmaschine, welche mit mehreren Entlüftungskreisen arbeitet, insbesondere für eine Brennkraftmaschine mit zwei Zylinderbänken, **dadurch gekennzeichnet,** daß im Entlüftungsweg zwischen den zu entlüftenden Aggregaten (Kurbelgehäuse; Kraftstofftank 2) und dem Ansaugtrakt (5) der Brennkraftmaschine (1) ein Adapter (17) vorgesehen ist, welcher einerseits mittels Leitungen (14, 15, 16, 36) mit den Aggregaten verbunden ist und andererseits über im Adapter (17) befindliche schwingungsoptimierte Kanäle (23, 24, 25, 26) sowie über kalibrierte Öffnungen (27, 29; 31, 32; 34, 35) derart mit dem Ansaugtrakt (5) verbunden ist, daß jedes zu entlüftende Aggregat bei dem jeweiligen Betriebszustand der Brennkraftmaschine (1) mit dem richtigen Ort des Ansaugtraktes (5) in Verbindung steht.

2. Entlüftungseinrichtung nach Anspruch 1, **dadurch gekennzeichnet,** daß der Adapter (17) aus einem über dem Ansaugtrakt (5) der Brennkraftmaschine (1) angeordneten flachen Gehäuse besteht, dessen Innenraum durch zwischen den Wandungen verlaufende Stege (42, 43, 44, 45, 46, 47) in Kanäle (23, 24, 25, 26) aufgeteilt ist, welche an einer Stirnseite (18) des Gehäuses beginnen und jeweils bis zu einem Zielort an dem benachbarten Ansaugtrakt (5) führen und dort kalibrierte Öffnungen (27, 29; 31, 32; 34, 35) aufweisen, die über Verbinder (28, 30; 33) mit dem Ansaugtrakt (5) gasleitend verbunden sind.

3. Entlüftungseinrichtung nach Anspruch 1 und 2, **dadurch gekennzeichnet,** daß das Gehäuse des Adapters (17) aus zwei mit ihren offenen Seiten aufeinanderliegenden flachen Schalen (38, 39) mit äußeren Rändern (40, 41) besteht, welche in ihrem Inneren entlang der Bodenfläche verlaufende Stege (42, 43, 44, 45, 46, 47) aufweisen, wobei sowohl die äußeren Ränder (40, 41) der Schalen (38, 39) als auch die Stege (42, 43, 44, 45, 46, 47) beider Schalen (38, 39) miteinander gasdicht verbunden sind und so die Kanäle (23, 24, 25, 26) bilden, die dem Ansaugtrakt (5) zugewandte Schale (39) die kalibrierten Öffnungen (27, 29, 31, 32; 34, 35) und die andere Schale (38) die an einer Stirnseite (18) des Adapters (17) angeordneten zu jedem Kanal (23, 24, 25, 26) gehörenden Stutzen (19, 20, 21, 22) aufweist.

4. Entlüftungseinrichtung nach Anspruch 1 bis 3, **dadurch gekennzeichnet,** daß die umlaufenden Ränder (40) und die Stege (42, 43, 44) an der einen Schale (38) als U-förmige Rinne, die umlaufenden Ränder (41) und die Stege (45, 46, 47) der anderen Schale (39) als in die U-förmige Rinne eintauchende Rippen ausgebildet sind und die Ränder (40, 41) sowie die Stege (42, 43, 44; 45, 46, 47) beider Schalen (38, 39) gasdicht und unlösbar miteinander verbunden sind.

5. Entlüftungseinrichtung nach Anspruch 1 bis 4, **dadurch gekennzeichnet,** daß ein oder mehrere Verbinder (33) zwischen dem Adapter (17) und dem Ansaugtrakt (5) als mit dem Adapter (17) fest verbundene Stutzen ausgebildet sind, welche dichtend in Öffnungen des Ansaugtraktes (5) eingreifen.

6. Entlüftungseinrichtung nach Anspruch 1 bis 4, **dadurch gekennzeichnet,** daß ein oder mehrere Verbinder (28, 30) als Muffen ausgebildet sind, welche am Adapter (17) befindliche Stutzen (27, 29) mit Stutzen am Ansaugtrakt (5) verbinden.

7. Entlüftungseinrichtung nach Anspruch 1 bis 6, **dadurch gekennzeichnet,** daß die den Adapter (17) bildenden Schalen (38, 39) aus einem thermoplastischen Kunststoff bestehen und durch Spritzgießen hergestellt sind.

8. Entlüftungseinrichtung nach Anspruch 1 bis 7, **dadurch gekennzeichnet,** daß die den Adapter (17) bildenden Schalen (38, 39) durch Reibschweißen verbunden sind.

## Claims

1. Breather device for an internal combustion engine, which operates with several breather circuits, in particular for an internal combustion engine with two banks of cylinders, characterised in that in the path of breathing between the units from which air is to be extracted (crankcase; fuel tank 2) and the intake tract (5) of the engine (1) is provided an adapter (17) which on the one hand is connected by means of pipes (14, 15, 16, 36) to the units and on the other hand is connected to the intake tract (5) by vibrationally optimised channels (23, 24, 25, 26) located in the adapter (17) as well as by calibrated openings (27, 29; 31, 32; 34, 35) in such a way that each unit from which air is to be extracted in the respective operating condition of the engine (1) is connected to the correct location of the intake tract (5).

2. Breather device according to claim 1, characterised in that the adapter (17) consists of a flat housing which is arranged over the intake tract (5) of the engine (1) and of which the interior is divided by webs (42, 43, 44, 45, 46, 47) extending between the walls into channels (23, 24, 25, 26) which begin at one end face (18) of the housing and in each case lead as far as a target location on the adjacent intake tract (5) and there comprise calibrated openings (27, 29; 31, 32; 34, 35) which are connected in gasconducting relationship to the intake tract (5) by connectors (28, 30; 33).

3. Breather device according to claims 1 and 2, characterised in that the housing of the adapter (17) consists of two flat shells (38, 39) with their open sides resting on each other, with outer edges (40, 41), which in their interior comprise webs (42, 43, 44, 45, 46, 47) extending along the bottom surface, wherein both the outer edges (40, 41) of the shells (38, 39) and the webs (42, 43, 44, 45, 46, 47) of both shells (38, 39) are connected to each other in gastight relationship and so form the channels (23, 24, 25, 26), the shell (39) facing towards the intake tract (5) comprises the calibrated openings (27, 29, 31, 32; 34, 35) and the other shell (38) comprises the connection pieces (19, 20, 21, 22) arranged at one end face (18) of the adapter (17) and belonging to each channel (23, 24, 25, 26).

4. Breather device according to claims 1 to 3, characterised in that the peripheral edges (40) and the webs (42, 43, 44) on one shell (38) are designed as a U-shaped channel, and the peripheral edges (41) and the webs (45, 46, 47) of the other shell (39) are designed as ribs entering the U-shaped channel, and the edges (40, 41) as well as the webs (42, 43, 44; 45, 46, 47) of both shells (38, 39) are connected to each other in gastight and non-releasable relationship.

5. Breather device according to claims 1 to 4, characterised in that one or more connectors (33) between the adapter (17) and the intake tract (5) are designed as connection pieces which are rigidly connected to the adapter (17) and engage sealingly in openings of the intake tract (5).

6. Breather device according to claims 1 to 4, characterised in that one or more connectors (28, 30) are designed as sockets which connect connection pieces (27, 29) located on the adapter (17) to connection pieces on the intake tract (5).

7. Breather device according to claims 1 to 6, characterised in that the shells (38, 39) forming the adapter (17) are made of a thermoplastic material by injection moulding.

8. Breather device according to claims 1 to 7, characterised in that the shells (38, 39) forming the adapter (17) are connected by friction welding.

## Revendications

1. Dispositif de dégazage pour un moteur à combustion interne travaillant avec plusieurs circuits de dégazage, notamment pour un moteur à combustion interne à deux rangées de cylindres, caractérisé par le fait qu'il est prévu sur le trajet de dégazage, entre les éléments à dégazer (carter de moteur; réservoir à combustible 2) et la tubulure d'admission (5) du moteur à combustion interne (1), un adaptateur (17) qui d'une part est connecté aux éléments par l'intermédiaire de conduites (14, 15, 16, 36) et d'autre part communique avec la tubulure d'admission (5) par l'intermédiaire de canaux (23, 24, 25, 26) optimisés du point de vue des oscillations dans l'adaptateur (17) et d'orifices (27, 29; 31, 32) calibrés, de telle sorte que, dans chaque état de fonctionnement du moteur à combustion interne (1), chaque élément à dégazer communique avec le point convenable de la tubulure d'admission (5).

2. Dispositif de dégazage selon la revendication 1, caractérisé par le fait que l'adaptateur (17) est formé d'un corps aplati disposé au-dessus de la tubulure d'admission (5) du moteur à combustion interne (1), dont la chambre intérieure est divisée par des nervures (42, 43, 44, 45, 46, 47) en des canaux (23, 24, 25, 26) qui partent d'une face frontale (18) du corps, mènent chacun à un point de la tubulure d'admission (5) voisine et comportent à ce niveau des orifices calibrés (27, 29; 31, 32; 34, 35) qui communiquent avec la tubulure d'admission (5) par l'intermédiaire de connecteurs (28, 30; 33).

3. Dispositif de dégazage selon les revendications 1 et 2, caractérisé par le fait que le corps de l'adaptateur (17) se compose de deux coquilles (38, 39) aplaties, pourvues de bords extérieurs (40, 41), qui sont placées l'une sur l'autre par leur côté ouvert et comportent intérieurement des nervures (42, 43, 44, 45, 46, 47) qui s'étendent le long du fond, les bords extérieurs (40, 41) des coquilles (38, 39) ainsi que les nervures (42, 43, 44, 45, 46, 47) des deux coquilles (38, 39) étant reliés entre eux de manière étanche au gaz et formant ainsi les canaux (23, 24, 25, 26), la coquille (39) tournée vers la tubulure d'admission (5) portant les orifices calibrés (27, 29, 31, 32, 34, 35) et l'autre coquille (38) comportant les embouts (19, 20, 21, 22) associés à chacun des canaux (23, 24, 25, 26) et disposés sur une face frontale (18) de l'adaptateur (17).

4. Dispositif de dégazage selon les revendications 1 à 3, caractérisé par le fait que les bords (40) périphériques et les nervures (42, 43, 44) d'une coquille (38) sont conformés en rainure en U et les bords (41) périphériques et les nervures (45, 46, 47) de l'autre coquille (39) sont conformés en arête pénétrant dans la rainure en U et par le fait que les bords (40, 41) ainsi que les nervures (42, 43, 44, 45, 46, 47) des deux coquilles (38, 39) sont reliés les uns aux autres de manière étanche au gaz et non séparable.

5. Dispositif de dégazage selon les revendications 1 à 4, caractérisé par le fait qu'un ou plusieurs connecteurs (33) entre l'adaptateur (17) et la tubulure d'admission (5) est(sont) agencés sont formés d'embouts solidaires de l'adaptateur (17) qui pénètrent avec étanchéité dans des ouvertures de la tubulure d'aspiration (5).

6. Dispositif de dégazage selon les revendications 1 à 4, caractérisé par le fait qu'un ou plusieurs connecteurs (33) entre l'adaptateur (17) et la tubulure d'admission (5) est(sont) agencés sont formés d'embouts qui relient des tronçons de tube (27, 29) de l'adaptateur (17) à des tronçons de tube sur la tubulure d'admission (5).

7. Dispositif de dégazage selon les revendications 1 à 6, caractérisé par le fait que les coquilles (38, 39) qui constituent l'adaptateur (17) sont réalisées en un matériau synthétique thermoplastique et sont fabriquées par moulage par injection.

8. Dispositif de dégazage selon les revendications 1 à 7, caractérisé par le fait que les coquilles (38, 39) qui constituent l'adaptateur (17) sont assemblées par soudage par friction.
